# FASCICULE DE BREVET EUROPEEN

(11) **EP 0 925 179 B1**
(45) Date de publication et mention de la délivrance du brevet: **20.03.2002**
(21) Numéro de dépôt: 97938971.5
(22) Date de dépôt: 02.09.1997
(51) Int. Cl.: B32B 18/00, B32B 5/26, H01Q 1/42, C04B 35/14, C04B 35/80

(54) **MATERIAU COMPOSITE CERAMIQUE A STRUCTURE DE TYPE "SANDWICH"**
KERAMISCHES VERBUNDMATERIAL MIT SANDWICHARTIGER STRUKTUR
COMPOSITE CERAMIC MATERIAL WITH SANDWICH TYPE STRUCTURE

(30) Priorité: 05.09.1996 FR 9611045
(43) Date de publication de la demande: 30.06.1999
(73) Titulaire: C.T.M.I. COTTON TEXTILES POUR MATERIAUX INNOVANTS, 38840 La Sone (FR)
(72) Inventeur: Desdoigts, Jacques, F-94160 Saint Mandé (FR); Dessinges, Jean, F-69550 Cublize (FR)
(74) Mandataire: Bratel, Gérard
(86) Numéro de dépôt international: FR9701547
(87) Numéro de publication internationale: WO9809811

(56) Documents cités:
- EP-A- 0 357 006
- WO-A-97/29907
- GB-A- 1 357 003
- US-A- 5 627 542

## Description

La présente invention concerne un matériau composite céramique, possédant une structure de type "sandwich", et susceptible d'être utilisé dans des applications où la température peut atteindre 600°C ou plus, la composition de ce matériau le rendant parfaitement adapté à la réalisation de fenêtres radioélectriques, c'est-à-dire de structures transparentes en totalité ou en partie aux ondes radioélectriques, et sa faible densité lui permettant de remplacer avantageusement les réalisations céramiques monolithiques, actuellement connues.

On connaît des matériaux qui possèdent une partie des caractéristiques du matériau objet de la présente invention.

Par exemple, il existe depuis de nombreuses années des matériaux composites à base de tissu de verre et de résines organiques, qui servent à la réalisation de pièces industrielles satisfaisantes du point de vue de la résistance mécanique et des propriétés radioélectriques, mais qui sont détruits bien avant d'atteindre une température de 600°C.

On connaît aussi des réalisations en céramique (alumine pure frittée), éventuellement renforcées par des fibres diverses. Ces réalisations sont satisfaisantes sur le plan de la tenue en température et de la résistance mécanique, mais elles ne le sont pas au point de vue des propriétés radioélectriques, et elles ont surtout l'inconvénient d'avoir une densité trop élevée.

Il existe des réalisations en silice fondue qui pourraient donner satisfaction quant à la tenue en température et aux propriétés radioélectriques, mais qui ne peuvent être renforcées par des fibres ou charges adéquates du fait des températures de mise en oeuvre. L'impossibilité d'inclure des renforts a pour conséquence une épaisseur nécessairement importante, qui rend ces réalisations pratiquement inutilisables en raison de leur poids élevé.

Enfin l'on connaît des réalisations en matériau composite minéral de type "sandwich" qui possèdent les propriétés ici requises, à l'exception des caractéristiques radioélectriques. Le but de la présente invention est de remédier aux inconvénients des matériaux connus ci-dessus évoqués, et par conséquent de fournir un matériau nouveau possédant simultanément toutes les caractéristiques précédemment envisagées, à savoir :
- une tenue en température satisfaisante, au moins jusqu'à 600°C,
- des propriétés radioélectriques, plus particulièrement dans les fréquences comprises entre 1 et 18 GHz,
- une faible densité (légèreté) et
- une résistance mécanique suffisante.

A cet effet, l'invention a essentiellement pour objet un matériau composite céramique à structure de type "sandwich", constitué de deux peaux disposées de part et d'autre d'une âme, chaque peau étant formée par la superposition de plusieurs épaisseurs de tissu de silice liées entre elles, tandis que l'âme est constituée par une mousse syntactique à base de silice. Ce matériau céramique est défini à la revendication 1.

Ce matériau composite est donc constitué de deux couches visibles extérieurement, dites "peaux", et d'une partie intérieure désignée comme "âme", située entre les deux peaux et liée à ces peaux.

Plus particulièrement, chaque peau est formée par la superposition de plusieurs épaisseurs ou "plis" de tissu de silice, imprégné sous pression de résine minérale, les différentes épaisseurs de tissu de silice étant liées entre elles par la même résine minérale que celle les imprégnant. Cette résine minérale est une résine à base de silice, de silicate de potasse et de silicate de soude. Le tissu de silice, constituant les peaux, est de préférence lui-même réalisé à partir d'un fil de tissage dont le poids spécifique est de préférence compris entre 11 et 640 tex, et la structure de ce tissu comprend de 2 à 25 fils/cm tant en chaîne qu'en trame.

Les peaux sont composées de plusieurs épaisseurs de tissu de silice, tel que précisé ci-dessus, dont le nombre est déterminé par les objectifs recherchés pour le matériau composite céramique à structure de type "sandwich" à obtenir. A titre d'exemple, avec une superposition de quatre épaisseurs ou "plis" de tissu de silice, dans chaque peau, on a obtenu une résistance mécanique en flexion de 100 MPa (mesurée suivant la norme française NF T 57.105 (Juin 1977) : "Détermination des caractéristiques de flexion - Méthode des trois pannes").

Chacune des deux peaux réalisées comme il vient d'être indiqué, est collée, de préférence avec la même résine minérale que celle imprégnant les épaisseurs de tissu, sur l'une des faces de l'âme du matériau considéré.

Cette âme est constituée par une mousse syntactique réalisée à partir de microsphères creuses de silice, liées entre elles par une résine minérale, notamment une résine minérale à base de silicate de soude. Ce mélange de microsphères creuses de silice et de résine minérale est spécialement traité sous un vide inférieur à 50 Pa (0,50 mbar), pour améliorer le caractère syntactique de la mousse et ses propriétés radioélectriques, par élimination de toutes les substances volatiles.

La composition et le procédé indiqués ci-dessus ont permis d'obtenir une âme en mousse de densité égale à environ 0,25, avec une constante diélectrique de 1,4 dans la bande X de la gamme des fréquences utilisées par les radars.

Tous les matériaux primaires mis en oeuvre résistent à des températures allant jusqu'à 900°C, et il est de même pour le matériau composite structural obtenu.

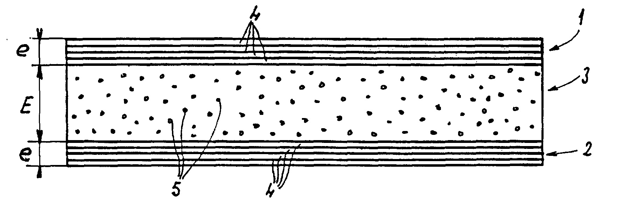

On a ainsi pu réaliser, comme l'illustre l'unique figure du dessin schématique annexé, un matériau composite à structure de type "sandwich", ayant une épaisseur totale de 7 mm, comprenant deux peaux 1 et 2 ayant chacune une épaisseur e de 0,9 mm, et une âme 3 ayant une épaisseur E de 5,2 mm. La figure fait aussi apparaître, en coupe et de façon très schématique, les différentes couches de tissu de silice 4 de chaque peau 1 ou 2, ainsi que les microsphères creuses de silice 5 de l'âme 3.

Le matériau composite, objet de l'invention, est applicable aussi bien à la réalisation de pièces planes, se présentant comme des panneaux, qu'à la réalisation de pièces en forme de profil géométrique adapté à leur utilisation. Ce matériau composite s'applique, par exemple, à la réalisation de radômes d'aéronefs ou de missiles, exploités à haute température.

Comme il va de soi, l'invention ne se limite pas au seul mode de réalisation de ce matériau composite céramique à structure de type "sandwich" qui a été décrite ci-dessus, à titre d'exemple. En particulier, l'on ne s'éloignerait pas du cadre de l'invention par l'adjonction de couches diverses de finition ou de protection, sur l'une des faces ou les deux faces du produit.

## Revendications

1. Matériau composite céramique à structure de type "sandwich", adapté à la réalisation de fenêtres radioélectriques, **caractérisé en ce qu'**il est constitué de deux peaux (1, 2) disposées de part et d'autre d'une âme (3), chaque peau (1, 2) étant formée par la superposition de plusieurs épaisseurs ou "plis" de tissu de silice (4), imprégné de résine minérale, les différentes épaisseurs de tissu de silice (4) étant liées entre elles par la même résine minérale que celle les imprégnant, qui est une résine à base de silice, de silicate de potasse et de silicate de soude, tandis que l'âme (3) est constituée par une mousse syntactique réalisée à partir de microsphères creuses de silice (5), liées entre elles par une résine minérale.

2. Matériau composite selon la revendication 1, **caractérisé en ce que** le tissu de silice constituant les peaux (1, 2) est réalisé à partir d'un fil de tissage dont le poids spécifique est compris entre 11 et 640 tex, la structure de ce tissu comprenant de 2 à 25 fils/cm tant en chaîne qu'en trame.

3. Matériau composite selon la revendication 1 ou 2, **caractérisé en ce que** la résine minérale, incorporée à l'âme (3), est une résine à base de silicate de soude.

4. Matériau composite selon l'une quelconque des revendications 1 à 3, **caractérisé en ce que** l'âme (3) est en mousse de densité égale à environ 0,25.

5. Application du matériau composite selon l'une quelconque des revendications 1 à 4 à la réalisation de radômes, exploités à haute température, pouvant atteindre 600° C.

## Patentansprüche

1. Keramisches Verbundmaterial mit sandwichartiger Struktur, das zur Herstellung radioelektrischer Fenster geeignet ist, **dadurch gekennzeichnet, dass** es durch zwei Schichten (1, 2) gebildet ist, die beiderseits auf einem Kern (3) angeordnet sind, wobei jede Schicht (1, 2) durch die Übereinanderschichtung mehrerer Schichten oder "Lagen" von Kieselerdegewebe (4) gebildet sind, die mit einem mineralischem Harz imprägniert sind, wobei die unterschiedlichen Schichten des Kieselerdegewebes (4) untereinander mit demselben mineralischen Harz verbunden sind, wie dem, mit dem sie imprägniert sind, welches ein Harz auf der Basis von Kieselerde, Kaliumsilikat, und Natriumsilikat ist, während der Kern (3) aus syntaktischem Schaumstoff gebildet ist, der auf der Grundlage von hohlen Mikrosphären aus Kieselerde (5) hergestellt ist, die untereinander mit einem mineralischen Harz miteinander verbunden sind.

2. Verbundmaterial nach Anspruch 1, **dadurch gekennzeichnet, dass** das Kieselerdegewebe, das die Schichten (1, 2) bildet, auf der Grundlage eines Gewebefadens hergestellt ist, dessen spezifisches Gewicht zwischen 11 und 640 tex liegt, wobei die Struktur dieses Gewebes von 2 bis 25 Fäden/cm sowohl bei der Kette als auch beim Schuß umfasst.

3. Verbundmaterial nach Anspruch 1 oder 2, **dadurch gekennzeichnet, dass** das in dem Kern (3) enthaltene mineralische Harz ein Harz auf der Basis eines Natriumsilikates ist.

4. Verbundmaterial nach einem der Ansprüche 1 bis 3, **dadurch gekennzeichnet, dass** der Kern (3) ein Schaumstoff mit einer Dichte ist, die ungefähr 0,25 entspricht.

5. Verwendung eines Verbundmaterials nach einem der Ansprüche 1 bis 4 zur Herstellung von Radomen, die bei hohen Temperaturen, die bis 600 °C erreichen können, benutzt werden.

## Claims

1. A ceramic composite material which has a "sandwich" type structure and which is suitable for the production of windows for radio-frequency energy, **characterised in that** it comprises two skins (1, 2) disposed on both sides of a core (3), each skin (1, 2) being formed by the superposition of a plurality of thicknesses or "plies" of silica cloth (4) which are impregnated with mineral resin, the various thicknesses of silica cloth (4) being bonded to each other by the same mineral resin as that with which they are impregnated, which is a resin based on silica, potassium silicate and sodium silicate, whilst the core (3) comprises a syntactic foam made of hollow microspheres of silica (5) which are bonded to each other by a mineral resin.

2. A composite material according to claim 1, **characterised in that** the silica cloth forming the skins (1, 2) is produced from a weaving thread having a specific weight between 11 and 640 tex, the structure of said cloth comprising 2 to 25 threads/cm both in the warp and in the weft.

3. A composite material according to claims 1 or 2, **characterised in that** the mineral resin which is incorporated in the core (3) is a resin based on sodium silicate.

4. A composite material according to any one of claims 1 to 3, **characterised in that** the core (3) is made of a foam of density equal to about 0.25.

5. Use of the composite material according to any one of claims 1 to 4 for the production of radomes which are employed at an elevated temperature which can reach 600°C.
